# EUROPÄISCHE PATENTSCHRIFT

(11) **EP 0 505 793 B1**
(45) Veröffentlichungstag und Bekanntmachung des Hinweises auf die Patenterteilung: **09.11.1994**
(21) Anmeldenummer: 92103909.5
(22) Anmeldetag: 06.03.1992
(51) Int. Cl.: F16J 15/32

(54) **Wellendichtring**
Shaft seal
Joint à lèvres

(30) Priorität: 27.03.1991 DE 4110154
(43) Veröffentlichungstag der Anmeldung: 30.09.1992
(73) Patentinhaber: Dichtungstechnik G. Bruss GmbH & Co. KG, D-22955 Hoisdorf (DE)
(72) Erfinder: Upper, Gerd, Dr.-Ing., W-2071 Hoisdorf (DE)
(74) Vertreter: Liesegang, Roland, Dr.-Ing.

(56) Entgegenhaltungen:
- DE-A- 1 942 659
- US-A- 3 685 841
- US-A- 4 836 561

## Beschreibung

Die Erfindung betrifft einen Wellendichtring, bei dem eine Dichtlippe an einem Elastomerteil eines ersten Ringteiles in Dichtkontakt mit einer Dichtfläche eines zweiten, relativ zum ersten Ringteil im Betrieb drehenden Ringteiles steht, und bei dem ein ringförmiges, elastomeres Stützteil am ersten Ringteil Axialkräfte an einer Radialfläche des zweiten Ringteiles mittels am Stützteil angeformten Vorsprüngen abstützt. die in gleichmäßigen Abständen in Umfangsrichtung am Stützteil verteilt angeordnet sind (DE-A-19 42 659, US-A-3 685 841).

Wellendichtringe dieser Art werden als "Kassettendichtungen" bezeichnet, weil sie die zum Zusammenwirken mit der Dichtlippe des Elastomerteiles erforderliche Gegenlauffläche selbst beinhalten und als einteiliges Konstruktionselement einfach zu montieren sind. Insbesondere bei der Montage solcher Wellendichtringe werden jedoch erhebliche axiale Kräfte von der in ein erstes Bauteil eingepreßten Kassettendichtung über das erste (steife) Ringteil und das elastomere Stützteil auf das zweite Ringteil aufgebracht, wenn das zweite Ringteil auf ein zweites relativ zum ersten Bauteil drehbares Bauteil aufgeschoben wird. Die axialen Kräfte können in der Praxis beispielsweise bis in den Bereich von 3 und 5 t kommen.

Im eingebauten Zustand bleiben die beiden relativ zueinander drehbaren Teile der Kassettendichtung axial gegeneinander verspannt. Da das zweite Ringteil im Betrieb relativ zum ersten Ringteil unter Axialkraftbelastung dreht, kommt es zu hoher Reibung und starkem Abrieb, solange die axiale Verspannung wirkt, und damit zu einem möglichen frühen Ausfall des Wellendichtringes.

Der Erfindung liegt die Aufgabe zugrunde, einen Wellendichtring der beschriebenen Art so auszubilden, daß die Lebensdauer nicht durch Axialkraftaufnahme beeinträchtigt wird.

Zur Lösung dieser Aufgabe ist bei einem Wellendichtring der eingangs beschriebenen Art vorgesehen, daß die Vorsprünge als Scheitel einer gewellten Fläche ausgebildet sind, wobei die gewellte Fläche in Drehrichtung unter geringer Neigung zu den Scheiteln hin ansteigt, derart, daß sich ein elasto-hydrodynamischer Schmierfilm in der Berührungszone zwischen der Radialfläche und der gewellten Fläche ausbildet.

Vorzugsweise ist die Fläche in Umfangsrichtung gesehen sinusförmig gewellt, wenngleich sie auch kreisbogenförmig oder dachförmig gewellt sein kann.

Durch die symmetrische Ausbildung der Flächen kann sich der elasto-hydrodynamische Schmierfilm in jeder Bewegungsrichtung ausbilden, was z.B. für die Anwendung der Erfindung bei Achsabdichtung wichtig ist.

Aufgrund der hohen Axialkräfte werden die Scheitelbereiche der gewellten Fläche des elastomeren Stützteils an der Radialfläche nahezu flachgedrückt, wobei sich aufgrund der hohen axialen Kräfte rechteckige Berührzonen ausbilden. In den Scheitelbereichen herrscht dabei die höchste Flächenpressung.

Da im Bereich benachbart dem Stützteil sich ein Schmiermittel befindet, z.B. ein Schmierfett, kann sich aufgrund der erfindungsgemäßen Gestaltung zwischen den elastisch oder plastisch verformten Berührstellen der Scheitelbereiche der gewellten Fläche und der Radialfläche ein zusammenhängender Schmierfilm aufgrund elasto-hydrodynamischer Effekte ausbilden, welcher einen Abrieb des Stützteils vermindert bzw. verhindert und so die Lebensdauer erhöht
Aus der Amplitude und der Periode der Scheitel ergibt sich die zur Bildung eines zusammenhängenden Schmierfilms erforderliche Neigung der gewellten Fläche in Drehrichtung zu den Scheiteln hin.

Die Erfindung ist im folgenden anhand schematischer Zeichnungen an Ausführungsbeispielen mit weiteren Einzelheiten näher erläutert. Es zeigen:
- Figur 1 und 2: Die Darstellung eines erfindungsgemäßen Wellendichtringes im Einsatz bei einer Radlagerung, und zwar Figur 1 bei noch nicht fertig montiertem Wellendichtring und Figur 2 bei einem Zustand mit auf einer Achse oder Welle montiertem Wellendichtring gemäß der Erfindung, wobei montagebedingte Axialkräfte zwischen den Ringteilen des Wellendichtringes wirken;
- Figur 3: eine perspektivische Teildarstellung des äußeren Ringteiles eines Wellendichtringes gemäß der Erfindung;
- Figur 4: einen Schnitt durch einen Wellendichtring mit einem äußeren Ringteil gemäß Figur 3 und
- Figuren 5, 6 und 7: Abwicklungen in Umfangsrichtung von unterschiedlich gestalteten Stützteilen des äußeren Ringteils eines Wellendichtringes gemäß der Erfindung, wobei Figur 5 die Auführung nach Figur 3 zeigt.

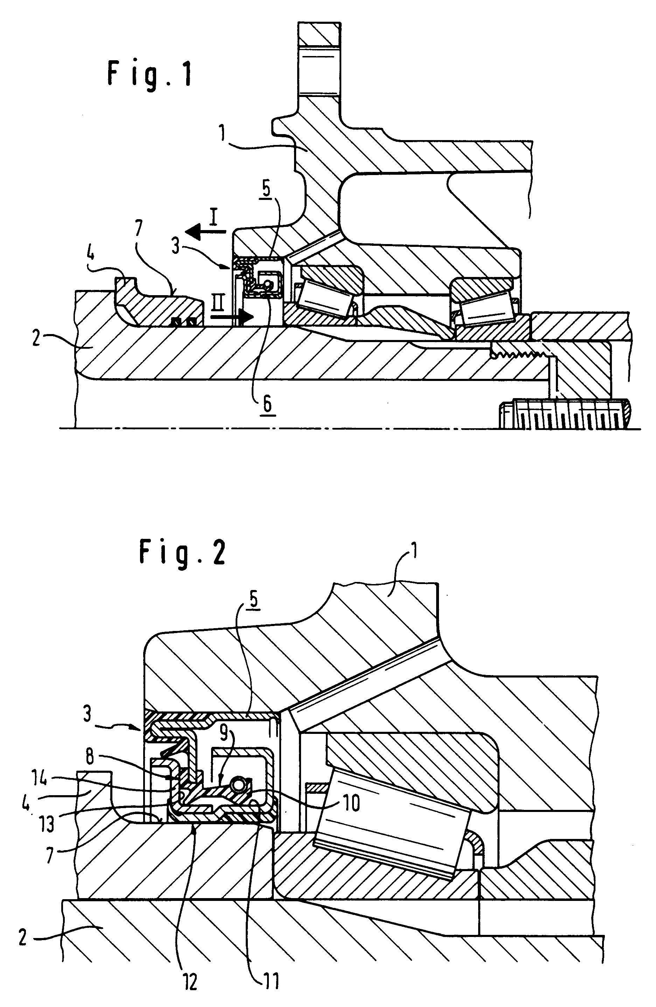

In den Figuren 1 und 2 bezeichnen die Bezugszeichen 1 eine umlaufende Radnabe, 2 eine Achse, 3 einen Wellendichtring gemäß der Erfindung und 4 einen Stützring auf der Achse. Der Wellendichtring ist mit einem äußeren Ringteil 5 in eine Ansenkung in der Nabe 1 eingedrückt. Zur Montage auf dem Stützring 4 wird die Radnabe in Richtung des Pfeils I verschoben, wobei sie den Wellendichtring 3 mitnimmt.

Sobald ein inneres Ringteil 6 des Wellendichtrings 3 auf die Umfangsfläche 7 des Stützringes 4 aufläuft, erfährt der Dichtring 3 eine axiale Widerstandskraft in Richtung des Pfeiles II in Figur 1. Diese Widerstandskraft wird in der Dichtung durch ein ringförmiges elastomeres Stützteil 8 aufgenommen, das einstückig mit einem mit dem äußeren Ringteil 5 fest verbundenen, die Dichtlippe 10 aufweisenden Elastomerteil 9 ist. Die Dichtlippe 10 wirkt mit einer axialen Dichtfläche 11 an einem inneren Ringteil 12 zusammen. Das Stützteil 8 wirkt mit einer Radialfläche 13 an einem vom inneren Ringteil 12 hochstehenden Kragen 14 zusammen. Aufgrund der relativen Drehung zwischen dem äußeren Ringteil 5 und dem inneren Ringteil 12 in montiertem Zustand entsteht unerwünschter Abrieb dann, wenn das Stützteil 8 eine über den gesamten Umfang gleichförmig in Kontakt mit der Radialfläche 13 stehenden Ringfläche ist.

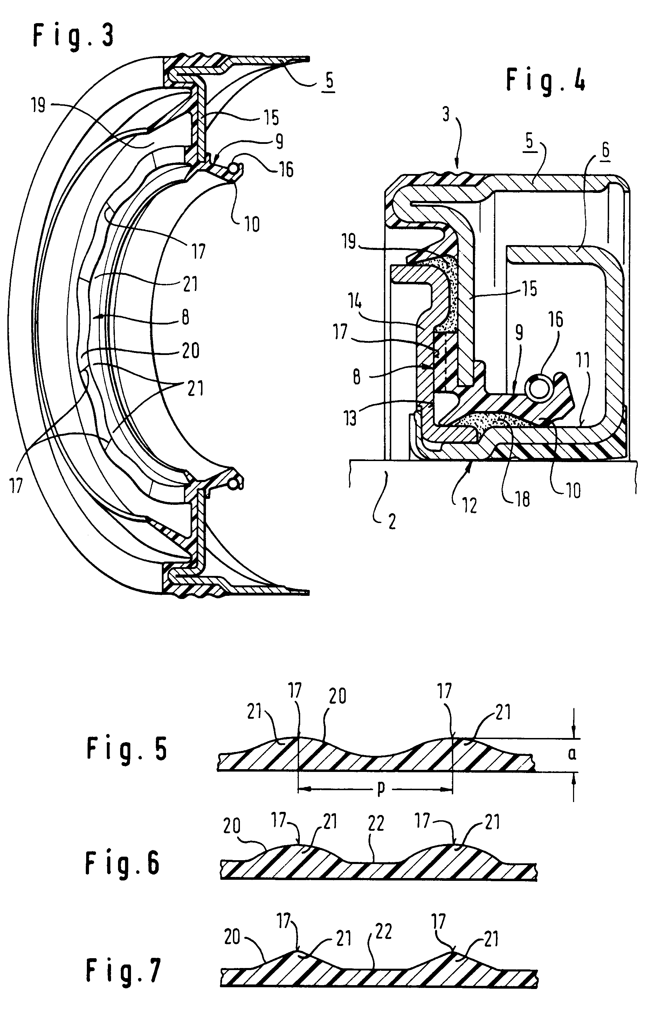

Anhand der Figuren 3 bis 5 sei nun eine erfindungsgemäße Ausgestaltung des Wellendichtringes 12, insbesondere des Stützteils 8 näher erläutert. Hierbei sind gleiche Teile mit gleichen Bezugszeichen wie in Figur 2 bezeichnet.

In Figur 3 ist lediglich eine Hälfte des äußeren Ringteils 5 in perspektivischer Darstellung aufgeschnitten gezeichnet. Das äußere Ringteil 5 hat einen nach innen ragenden radialen Flansch 15, an welchen das Elastomerteil 9 mit dem Stützteil 8 und der Dichtlippe 10 anvulkanisiert ist. Die Dichtlippe 10 ist über die übliche Wurmfeder 16 in montiertem Zustand (Figur 4) radial nach innen gegen die Fläche 11 am inneren Ringteil 12 gedrückt. Das Stützteil 8 hat in Umfangsrichtung gesehen eine sinusförmig gewellte Kontur 20, wobei Scheitel 17 an den höchsten Stellen von Vorsprüngen 21 in Figur 3 als radiale Linien angedeutet sind. Über diese Scheitel 17 steht das Stützteil 8 in montiertem Zustand des Wellendichtrings an mehreren Berührungsstellen in Linienberührung mit der Radialfläche 13 am Kragen 14 des inneren Ringteils 12.

Die Dichtung weist Fettfüllungen in den Räumen 18 und 19 zur Schmierung der Dichtstellen bei 10 und 17 auf. Aufgrund der Fettfüllung im Raum 19 radial außerhalb des Stützteiles 8 bildet sich an den Berührstellen, die sich unter der Wirkung der hohen Axialkräfte zu einer flächigen Berührzone ausformen, ein elasto-hydrodynamischer Schmierfilm an den Kontaktstellen 17 aus. Durch diesen Schmierfilm wird ein großflächiger direkter Materialkontakt zwischen der Fläche 20 des Stützteils 8 und der Radialfläche 13 am Kragen 14 des Ringteils 12 bei der Aufnahme der axialen Montagekraft vermieden, was zu erheblich erhöhter Lebensdauer führt.

In Figur 5 ist die sinusförmig gewellte Fläche 20 des Stützteiles 8 in die Ebene abgewickelt dargestellt. Die Form gemäß Fig. 5 läßt sich beispielsweise dadurch abwandeln, daß die Vorsprünge 21 gemäß Figur 6 kreisbogenförmig oder gemäß Figur 7 dachförmig mit dazwischenliegenden ebenen Flächenstücken 22 ausgebildet sind.

Es ist auch möglich, daß eine Wölbung oder Zuspitzung der Fläche 20 in radialer Richtung, d.h. in Richtung quer zur Zeichenebene in den Figuren 5, 6 und 7 gesehen, vorhanden ist, wobei dann die Scheitel 17 Spitzen- oder Gipfelpunkte mit Punktberührung bzw. unter Axialdruck kreisförmige Berührungsflächen mit der Radialfläche 13 bilden. In Figur 4 gesehen wäre dann der geradlinige Verlauf des Scheitels 17 in radialer Richtung durch einen gewölbten oder von zwei Seiten gegenläufig angeschrägten Verlauf ersetzt zu denken (nicht gezeigt).

Selbstverständlich kann ein Wellendichtring mit den Vorsprüngen 21 und der beispielsweise sinusförmig gewellten Fläche 20 gemäß Figur 5 durch Spritzformen hergestellt werden. Die Form zum Erzeugen der Wellung kann in üblicher Weise durch Kopierdrehen hergestellt werden.

Bei einer bevorzugten Ausführung der Erfindung ist die Amplitude a der sinusförmig gewellten Fläche 20 gemäß Fig. 5 kleiner als 3 mm und liegt vorzugsweise im Bereich zwischen 0,5 und 1,0 mm. Eine entsprechende Amplitude ist auch bei den Ausführungen nach den Figuren 6 und 7 sinnvoll.

Um den Umfang verteilt sollten aus statischen Gründen mindestens drei Vorsprünge vorgesehen sein. Die Periode p (das ist der Abstand zweier benachbarter Scheitel 17) der Vorsprünge (in Umfangsrichtung) liegt vorteilhaft zwischen 40 und 60 mm. Bei einer ausgeführten Konstruktion mit Sinuskontur waren bei einem Durchmesser der Sinuskontur von 135 mm insgesamt neun Vorsprünge vorgesehen. Dies entspricht einer Periode von 47 mm.

## Patentansprüche

1. Wellendichtring, bei dem eine Dichtlippe (10) an einem Elastomerteil (9) eines ersten Ringteiles (5) in Dichtkontakt mit einer Dichtfläche (11) eines zweiten, relativ zum ersten Ringteil (5) im Betrieb drehenden Ringteiles (12) steht, und bei dem ein ringförmiges, elastomeres Stützteil (8) am ersten Ringteil Axialkräfte an einer Radialfläche (13) des zweiten Ringteiles (12) mittels am Stützteil (8) angeformten Vorsprüngen (21) abstützt, die in gleichmäßigen Abständen in Umfangsrichtung am Stützteil (8) verteilt angeordnet sind,
dadurch **gekennzeichnet**, daß die
Vorsprünge (21) als Scheitel (17) einer gewellten Fläche (20) ausgebildet sind, wobei die gewellte Fläche (20) in Drehrichtung unter geringer Neigung zu den Scheiteln (17) hin ansteigt, derart, daß sich ein elasto-hydrodynamischer Schmierfilm in der Berührungszone zwischen der Radialfläche (13) und der gewellten Fläche (20) ausbildet.

2. Wellendichtring nach Anspruch 1,
dadurch **gekennzeichnet**, daß das Stützteil (8) einstückig mit dem die Dichtlippe (10) aufweisenden Elastomerteil (9) ist.

3. Wellendichtring nach Anspruch 1 oder 2, dadurch
**gekennzeichnet**, daß die gewellte Fläche (20) in Umfangsrichtung gesehen sinusförmige Vorsprünge (21) aufweist.

4. Wellendichtring nach Anspruch 1 oder 2, dadurch
**gekennzeichnet**, daß die gewellte Fläche (20) in Umfangsrichtung gesehen halbkreisförmige Vorsprünge (21) aufweist.

5. Wellendichtring nach einem der Ansprüche 1 bis 4,
dadurch **gekennzeichnet**, daß die gewellte
Fläche (20) dachförmige Vorsprünge (21) aufweist.

6. Wellendichtring nach einem der Ansprüche 1 bis 5,
dadurch **gekennzeichnet**, daß die Scheitel (17)
auch in Radialrichtung gesehen gewölbt bzw. zugespitzt sind.

7. Wellendichtring nach einem der Ansprüche 1 bis 6,
**dadurch gekennzeichnet**, daß die
Amplitude (a) der Scheitel (17) kleiner als 3 mm ist.

8. Wellendichtring nach Anspruch 7,
**dadurch gekennzeichnet**, daß die
Amplitude (a) der Scheitel (17) im Bereich von 0,5 bis 1,0 mm liegt.

9. Wellendichtring nach einem der Ansprüche 1 bis 8,
**dadurch gekennzeichnet**, daß die
Periode (p) der Scheitel (17) im Bereich zwischen 40 und 60 mm liegt.

## Claims

1. Shaft sea in which a sealing lip (10) on an elastomer portion (9) of a first ring part (5) is in sealing contact with a sealing face (11) of a second ring part (12) rotating in operation relative to the first ring part (5) and in which a circular, elastomeric support part (8) on the first ring part (5) supports axial forces on a radial face (13) of the second ring part (12) by means of projections (21) shaped onto the support part (8) and which are distributed on the said support part (8) at uniform circumferential intervals, characterized in that the projections (21) are constructed as the crests (17) of a corrugated surface (20), the corrugated surface (20) rising in the rotation direction with a small gradient towards the crests (17), in such a way that an elastohydrodynamic lubricating film forms in the contact zone between the radial face (13) and the corrugated surface (20).

2. Shaft seal according to claim 1, characterized in that the support part (8) is in one piece with the elastomer portion (9) having the sealing lip (10).

3. Shaft seal according to claim 1 or 2, characterized in that the corrugated surface (20) has in the circumferential direction sinusoidal projections (21).

4. Shaft seal according to claim 1 or 2, characterized in that the corrugated surface (20), considered in the circumferential direction, has semicircular projections (21).

5. Shaft seal according to one of the claims 1 to 4, characterized in that the corrugated surface (20) has roof-shaped projections (21).

6. Shaft seal according to one of the claims 1 to 5, characterized in that the crests (17) are curved or tapered also in the radial direction.

7. Shaft seal according to one of the claims 1 to 6, characterized in that the amplitude (a) of the crests (17) is smaller than 3 mm.

8. Shaft seal according to claim 7, characterized in that the amplitude (a) of the crests (17) is between 0.5 and 1.0 mm.

9. Shaft seal according to one of the claims 1 to 8, characterized in that the period (p) of the crests (17) is between 40 and 60 mm.

## Revendications

1. Bague d'étanchéité pour arbre, dans laquelle une lèvre d'étanchéité (10) portée par une partie en élastomère (9) d'une première pièce annulaire (5) est en contact étanche avec une surface d'étanchéité (11) d'une seconde pièce annulaire (12) qui tourne en service par rapport à la première (5),et dans laquelle une partie annulaire d'appui (8) en élastomère, prévue sur la première pièce annulaire, supporte des forces axiales, transmises par une face radiale (13) de la seconde pièce annulaire (12), au moyen de saillies (21) formées sur cette partie d'appui (8) et disposées de façon répartie à des intervalles uniformes en direction circonférentielle sur cette partie d'appui (8), caractérisée en ce que les saillies (21) sont réalisées comme des sommets (17) d'une surface ondulée (20), surface qui monte sous une faible inclinaison vers les sommets (17) dans le sens de rotation, de manière qu'une pellicule lubrifiante élastohydrodynamique se forme dans la zone de contact entre la face radiale (13) et la surface ondulée (20).

2. Bague d'étanchéité pour arbre selon la revendication 1, caractérisée en ce que la partie d'appui (8) est d'un seul tenant avec la partie en élastomère (9) portant la lèvre d'étanchéité (10).

3. Bague d'étanchéité pour arbre selon la revendication 1 ou 2, caractérisée en ce que la surface ondulée (20) présente des saillies (21) de forme sinusoïdale vue dans la direction circonférentielle.

4. Bague d'étanchéité pour arbre selon la revendication 1 ou 2, caractérisée en ce que la surface ondulée (20) présente des saillies (21) ayant une forme en demi-cercle vue dans la direction circonférentielle.

5. Bague d'étanchéité pour arbre selon une des revendications 1 à 4, caractérisée en ce que la surface ondulée (20) présente des saillies (21) en forme de dièdre.

6. Bague d'étanchéité pour arbre selon une des revendications 1 à 5, caractérisée en ce que les sommets (17) sont également renflés ou effilés en pointe en direction radiale.

7. Bague d'étanchéité pour arbre selon une des revendications 1 à 6, caractérisée en ce que l'amplitude (a) des sommets (17) est inférieure à 3 mm.

8. Bague d'étanchéité pour arbre selon la revendication 7, caractérisée en ce que l'amplitude (a) des sommets (17) est comprise entre 0,5 et 1 mm.

9. Bague d'étanchéité pour arbre selon une des revendications 1 à 8, caractérisée en ce que le pas (p) des sommets (17) est compris entre 40 et 60 mm.
